# EUROPEAN PATENT APPLICATION

(11) **EP 2 910 343 A2**
(43) Date of publication of application: **26.08.2015**
(21) Application number: 15151199.5
(22) Date of filing: 14.01.2015
(51) Int. Cl.: B25F 5/02

(54) **Pneumatic tool and method for assembling the same**

(30) Priority: 16.01.2014 TW 103101637
(71) Applicant: Basso Industry Corp., Taichung (TW)
(72) Inventor: Lin, Yi-Ko, Taichung (TW); Huang, Chi-Yung, Taichung (TW)
(74) Representative: Lang, Christian

(57) **Abstract**

A pneumatic tool includes a front housing, an air cylinder, a rotor and a rear housing. The front housing includes a first depressing portion recessedly formed at an end thereof. The air cylinder includes a cylinder body and a front end cover. The cylinder body includes a first end, a second end and at least one exhaust channel. The first end is engaged with the first depressing portion. The exhaust channel is formed at the cylinder body. The front end cover is engaged with the first end. The rear housing includes a second depressing portion recessedly formed at an end thereof. The second end of the cylinder body is engaged with the second depressing portion. The front housing is assembled with the rear housing, and the front housing and the rear housing abut against the air cylinder in an airtight manner.

## Description

### BACKGROUND

### Technical Field

The present disclosure relates to a pneumatic tool and a method for assembling the pneumatic tool. More particularly, the present disclosure relates to a pneumatic tool which can be assembled with fewer screwing pieces and a method for assembling the pneumatic tool.

### Description of Related Art

A pneumatic tool is a tool driven by pressurized air for screwing or drilling, such as a pneumatic drill or a pneumatic wrench. An air cylinder is disposed inside the pneumatic tool, and the pressurized air is guided into the air cylinder for driving a power mechanism. A conventional pneumatic tool further includes a front housing and a rear housing, and two ends of the air cylinder are respectively assembled with the front housing and the rear housing via bolts in an airtight manner. Moreover, a middle housing surrounds the air cylinder for exhausting the pressurized air and protecting the air cylinder. A conventional method for assembling the front housing, the middle housing and the rear housing is first assembling the front housing and the middle housing with four bolts and then assembling the middle housing and the rear housing with another four bolts. Specifically, the four bolts are inserted through four through holes of the front housing and then screwed with four thread holes of the middle housing, and the other four bolts are inserted through four through holes of the rear housing and then screwed with another four thread holes of the middle housing. Another conventional method for assembling the front housing, the middle housing and the rear housing is by using eight bolts and eight nuts. Specifically, the four bolts are inserted through four through holes of the front housing and four through holes of the middle housing, and then screwed with the four nuts. In a similar fashion, the other four bolts are inserted through four through holes of the rear housing and another four through holes of the middle housing, and then screwed with the other four nuts. For adapting the aforementioned methods, the middle housing is required to be made of solid material, such as metal, for sustaining the screw stress. As a result, the middle housing is heavy, which increases a total weight of the pneumatic tool.

Furthermore, an excessive number of bolts are required for assembling the pneumatic tool, which results drawbacks as follows. First, the component cost of the pneumatic tool is high. Second, a volume of the pneumatic tool is required to be enlarged for disposing the eight bolts. Third, the total weight of the pneumatic tool is increased due to the weight of the bolts. Fourth, the assembling process and disassembling process of the pneumatic tool are cumbersome, and the time required for the processes is excessive long. During assembling or disassembling the pneumatic tool, an operator has to hold the pneumatic tool with one hand and screw or unscrew the bolts with the other hand. When the time of the assembling process or disassembling process is excessive long, the operator may be subject to fatigue and become hardly to bear the weight of the pneumatic tool with only one hand. As a result, the pneumatic tool may accidentally drop on the floor, or even more drop on the feet of the operator.

Moreover, the middle housing is configured to be assembled in a fixed orientation, that is, an orientation of an exhaust structure or a trademark of the middle housing is fixed. It's likely that the air exhausting direction of the exhaust structure is undesired, for example, the air may stir up dust or spoil the processing result. For solving the problem, the operator has to prepare at least two kinds of pneumatic tool whose air exhausting directions are different for satisfying practice needs.

To sum up, the relevant industry is in need of a pneumatic tool which has fewer metal components and/or fewer bolts, and the assembling process and disassembling process thereof can be simplified. The relevant industry is also in need of a pneumatic tool which air exhausting direction can be adjusted. Therefore, the aforementioned drawbacks of the conventional pneumatic tool can be avoided.

### SUMMARY

According to one aspect of the present disclosure, a pneumatic tool includes a front housing, an air cylinder, a rotor and a rear housing. The front housing includes a first depressing portion recessedly formed at an end thereof. The air cylinder includes a cylinder body and a front end cover. The cylinder body includes a first end, a second end and at least one exhaust channel. The first end is engaged with the first depressing portion of the front housing. The second end is opposite to the first end. The exhaust channel is formed at the cylinder body for communicating an inside of the air cylinder with an outside of the air cylinder. The front end cover is engaged with the first end of the cylinder body. The rotor is rotatably disposed in the air cylinder. The rear housing includes a second depressing portion recessedly formed at an end thereof. The second end of the cylinder body is engaged with the second depressing portion. The front housing is assembled with the rear housing, thus the front housing and the rear housing abut against the air cylinder in an airtight manner.

Furthermore, a first step portion can be formed at the first end of the cylinder body, and the first step portion can be engaged with the front end cover. The front end cover can be formed in a plate shape, a front step portion can be formed at an outer edge of the front end cover, and the front step portion of the front end cover can be engaged with the first step portion of the cylinder body, and the front end cover is respectively engaged with the first depressing portion of the front housing and the first step portion of the cylinder body. The first depressing portion can include a first pressing surface for abutting against the front end cover along an axial direction of the pneumatic tool.

Moreover, the pneumatic tool can further include a middle housing. The middle housing can include at least one exhaust opening, wherein the middle housing surrounds the air cylinder so as to form an air chamber therebetween, the exhaust opening communicates the air chamber with an outside of the middle housing, and the air chamber communicates the exhaust opening of the middle housing and the exhaust channel of the cylinder body. The cylinder body can be formed in a hollowing shape, and the air cylinder can further include a rear end cover engaged with the second end of the cylinder body. A second step portion can be formed at the second end of the cylinder body, and the second step portion can be engaged with the rear end cover. The rear end cover can be formed in a plate shape, the rear end cover can include a rear outer edge, the rear outer edge of the rear end cover can be engaged with the second step portion of the cylinder body, and the rear end cover is respectively engaged with the second step portion of the cylinder body and the second depressing portion of the rear housing. The second depressing portion can include a second pressing surface for abutting against the rear end cover along the axial direction of the pneumatic tool.

Moreover, the pneumatic tool can further include a positioning member positioned through the cylinder body and inserted into the front end cover and the rear end cover for resisting a rotational force of the rotor.

Moreover, the middle housing can be formed in a hollow shape, the front housing can further include a first abutting surface outwardly extended from the first depressing portion for abutting against the middle housing along the axial direction of the pneumatic tool, the rear housing can further include a second abutting surface outwardly extended from the second depressing portion for abutting against the middle housing along the axial direction of the pneumatic tool, thus the middle housing is stably positioned between the front housing and the rear housing. The front housing, the middle housing and the rear housing can be assembled to form a cylinder shape, a square cylinder shape or a polygonal cylinder shape.

According to another aspect of the present disclosure, a method for assembling the aforementioned pneumatic tool can include steps as follows. The front housing, the middle housing and the rear housing are provided. The middle housing is abutted between the front housing and the rear housing in an airtight manner. The front housing and the rear housing are detachably assembled for positioning the middle housing between the front housing and the rear housing.

The middle housing can be made of lightweight material. Moreover, the method for assembling the aforementioned pneumatic tool can further include steps as follows. The front housing and the rear housing are disassembled. The middle housing is rotated for changing an orientation of the exhaust opening. The front housing and the rear housing are reassembled for repositioning the middle housing between the front housing and the rear housing.

### BRIEF DESCRIPTION OF THE DRAWINGS

The disclosure can be more fully understood by reading the following detailed description of the embodiment, with reference made to the accompanying drawings as follows:
Fig. 1 is a three-dimensional view of a pneumatic tool according to one embodiment of the present disclosure;
Fig. 2 is an exploded view of the pneumatic tool shown in Fig. 1;
Fig. 3 is a cross-sectional view taken along line 3-3 of the pneumatic tool shown in Fig. 1;
Fig. 4 is a partially cross-sectional view taken along line 4-4 of the pneumatic tool shown in Fig. 3;
Fig. 5 is a cross-sectional view taken along line 3-3 of an air cylinder of the pneumatic tool shown in Fig. 1;
Fig. 6 is a cross-sectional view taken along line 6-6 of the pneumatic tool shown in Fig. 3;
Fig. 7 is a partially enlarged cross-sectional view of the pneumatic tool shown in Fig. 1;
Fig. 8 is a flow diagram of a method for assembling the pneumatic tool shown in Fig. 1 according to another embodiment of the present disclosure;
Fig. 9 is a three-dimensional view of a pneumatic tool according to further another embodiment of the present disclosure; and
Fig. 10 is a three-dimensional view of a pneumatic tool according to yet another embodiment of the present disclosure.

### DETAILED DESCRIPTION

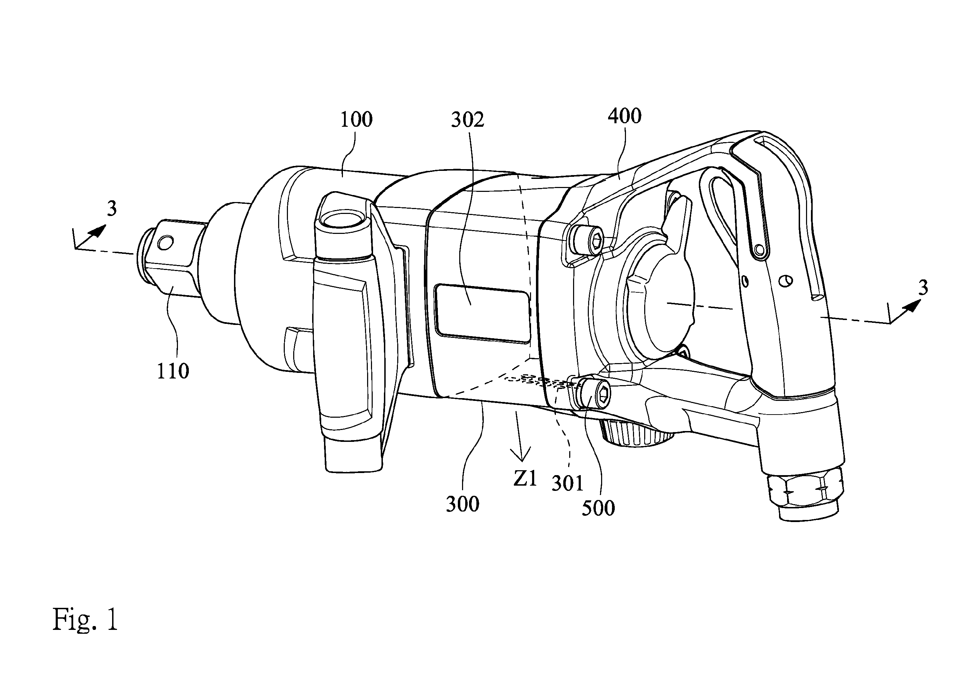

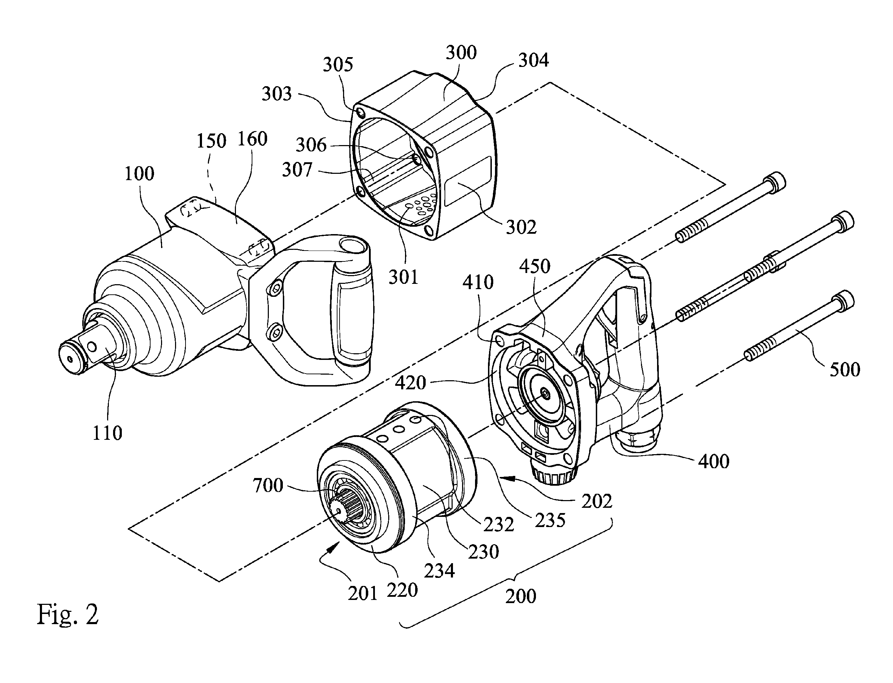

Fig. 1 is a three-dimensional view of a pneumatic tool according to one embodiment of the present disclosure. Fig. 2 is an exploded view of the pneumatic tool shown in Fig. 1. As shown in Fig. 1 and Fig. 2, the pneumatic tool includes a front housing 100, a middle housing 300, an air cylinder 200, a rotor 700 and a rear housing 400. The rotor 700 is rotatably disposed in the air cylinder 200. The air cylinder 200 is surrounded by the middle housing 300, and the air cylinder 200 is engaged with the front housing 100 with an end 201 thereof and engaged with the rear housing 400 with the other end 202 thereof. The front housing 100 is assembled with the rear housing 400 via four screwing pieces 500, thus the front housing 100 and the rear housing 400 abut against the air cylinder 200 and the middle housing 300 in an airtight manner. In detail, four thread holes 150 are formed at an end 160 of the front housing 100 facing the middle housing 300 and arranged around an axial of the pneumatic tool. Four first through holes 305 are formed at an end 303 of the middle housing 300 facing the front housing 100, and four second through holes 306 are formed at the other end 304 of the middle housing 300 facing the rear housing 400. The four first through holes 305 and the four second through holes 306 are correspondent to the four thread holes 150 of the front housing 100. Four through holes 410 are formed at an end 450 of the rear housing 400 facing the middle housing 300 and are correspondent to the four thread holes 150 of the front housing 100. When the pneumatic tool is assembled, the air cylinder 200 is disposed inside the middle housing 300, and each of the four screwing pieces 500 inserts through one of the through holes 410 of the rear housing 400, one of the second through holes 306 of the middle housing 300, one of the first through holes 305 of the middle housing 300 and then screwed with one of the thread holes 150 of the front housing 100. Comparing with a conventional pneumatic tool, the middle housing 300 has no thread holes for screwing with the screwing pieces 500. Therefore, the middle housing 300 is not required to be made of solid material, such as metal material, for sustaining the screw stress. In other words, the middle housing 300 can be made of lightweight material, such as plastic material. Therefore, a total weight of the pneumatic tool can be reduced. When the middle housing 300 is made of plastic material, the cost thereof can be reduced, and the production efficiency can be enhanced. Furthermore, only four screwing pieces 500 are needed for the pneumatic tool, which are fewer than that needed for the conventional pneumatic tool. Therefore, the component cost, the volume and the total weight of the pneumatic tool can be reduced. The assembling process and disassembling process of the pneumatic tool can be simplified, too. Accordingly, accidents, such as dropping the pneumatic tool on the floor, due to the fatigue of an operator can be avoided.

The aforementioned term "in an airtight manner" means two components are airtight, i.e., air is not allowed to get in or out between the two components. Elements, such as washers or gasket, can be disposed between the two components for improving the airtight degree. The airtight technique is conventional and well known, and will not be described herein.

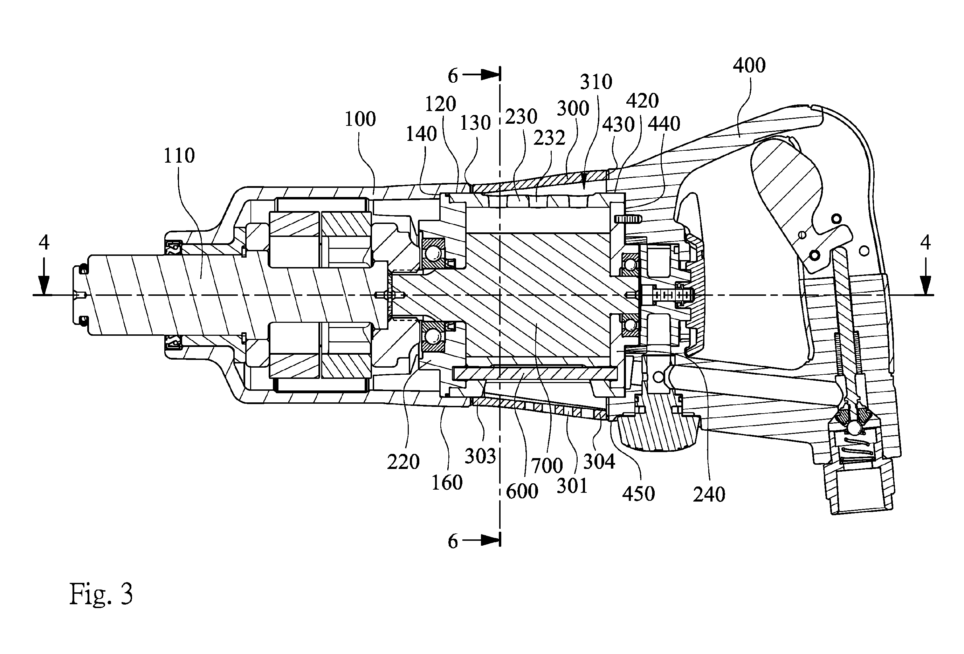

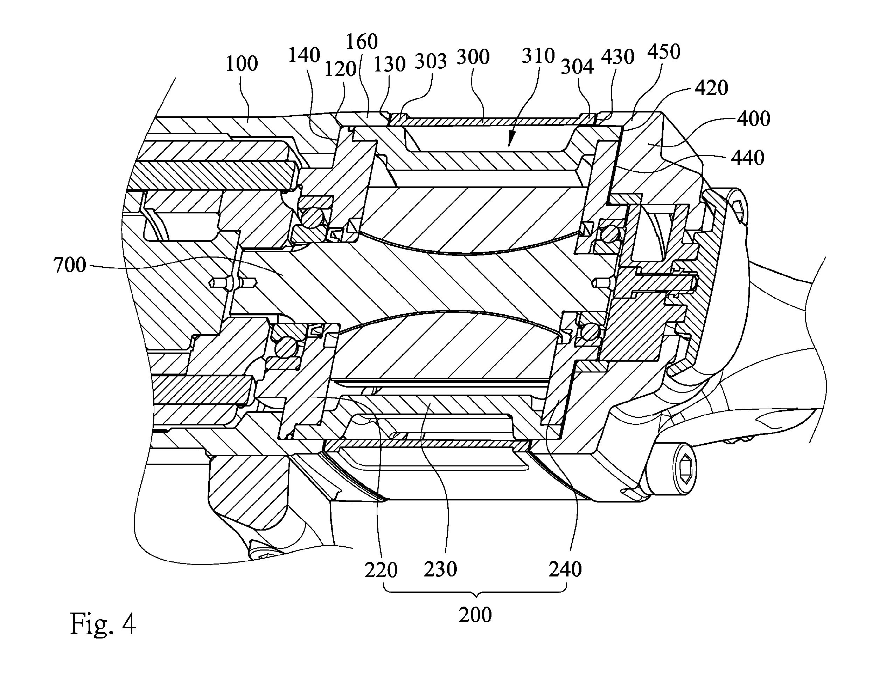

Fig. 3 is a cross-sectional view taken along line 3-3 of the pneumatic tool shown in Fig. 1. Fig. 4 is a partially cross-sectional view taken along line 4-4 of the pneumatic tool shown in Fig. 3. In Fig.3, the front housing 100 is formed in a hollowing shape. A power mechanism 110 is disposed inside the front housing 100. The front housing 100 includes a first depressing portion 120 and a first abutting surface 130. The first depressing portion 120 is recessedly formed at the end 160 of the front housing 100 for engaging with the end 201 (shown in Fig. 2) of the air cylinder 200. The first depressing portion 120 includes a first pressing surface 140. The first abutting surface 130 is outwardly extended from the first depressing portion 120 along a radical direction of the first depressing portion 120. The radical direction is perpendicular to an axial direction of the pneumatic tool.

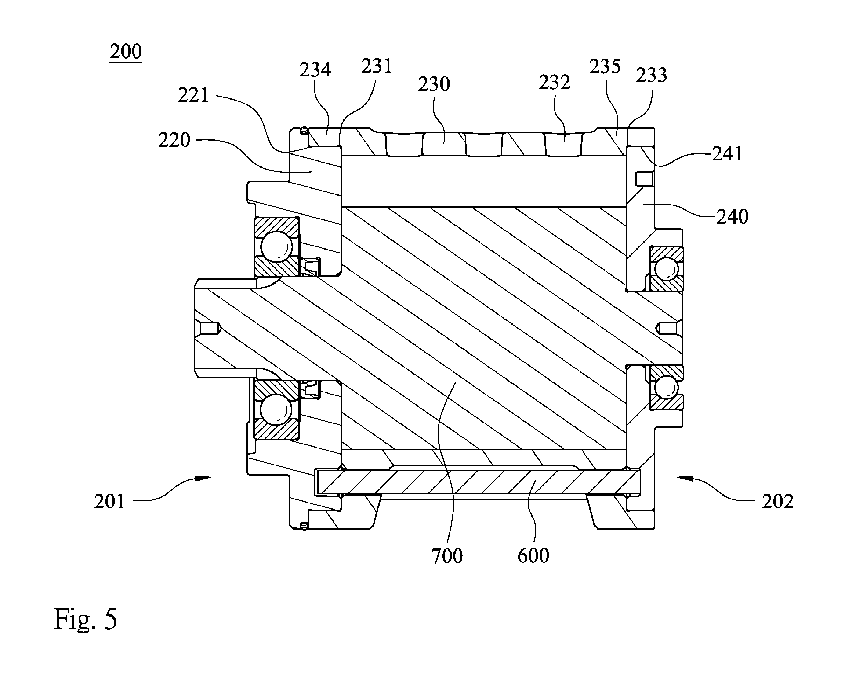

Fig. 5 is a cross-sectional view taken along line 3-3 of the air cylinder 200 of the pneumatic tool shown in Fig. 1. In Fig. 5, the rotor 700 is rotatably disposed in the air cylinder 200 for driving the power mechanism 110 (shown in Fig. 3). The air cylinder 200 includes a front end cover 220, a cylinder body 230 and a rear end cover 240. The front end cover 220 is formed in a plate shape, and a front step portion 221 is formed at an outer edge of the front end cover 220. The cylinder body 230 is formed in a hollowing shape and includes a first end 234, a second end 235 and three exhaust channels 232. A first step portion 231 is formed at the first end 234 of the cylinder body 230. The second end 235 is opposite to the first end 234, and a second step portion 233 is formed at the second end 235 of the cylinder body 230. The exhaust channels 232 are formed at the cylinder body 230 for communicating an inside of the air cylinder 200 with an outside of the air cylinder 200. The rear end cover 240 is formed in a plate shape and includes a rear outer edge 241. The front end cover 220 is engaged with the first end 234 of the cylinder body 230, and the rear end cover 240 is engaged with the second end 235 of the cylinder body 230. More specifically, the front step portion 221 of the front end cover 220 is engaged with the first step portion 231 of the cylinder body 230, and the rear outer edge 241 of the rear end cover 240 is engaged with the second step portion 233 of the cylinder body 230. Thus, the airtight degree between the front end cover 220 and the cylinder body 230 can be enhanced, and the airtight degree between the cylinder body 230 and the rear end cover 240 can be enhanced.

In this embodiment, the air cylinder 200 further includes a positioning member 600. The positioning member 600 is for resisting a rotational force of the rotor 700. In this embodiment, the positioning member 600 is formed in a pin shape, and is positioned through the cylinder body 230 and inserted into the front end cover 220 and the rear end cover 240. Thus, when the rotor 700 rotates, a rotational displacement between the front end cover 220 and the cylinder body 230 and a rotational displacement between the cylinder body 230 and the rear end cover 240 caused by the rotational force can be reduced. Accordingly, the front end cover 220, the cylinder body 230 and the rear end cover 240 can be stably positioned. In other embodiment, the positioning member (not shown) can be a protrusion portion (not shown) and a concave portion (not shown) integrally formed on the front end cover 220 and the cylinder body 230 and/or formed on the cylinder body 230 and the rear end cover 240, wherein the protrusion portion is matted with the concave portion. Thus the rotational displacement between the front end cover 220 and the cylinder body 230 and/or the rotational displacement between the cylinder body 230 and the rear end cover 240 caused by the rotational force can be reduced. Accordingly, the front end cover 220, the cylinder body 230 and the rear end cover 240 can be stably positioned.

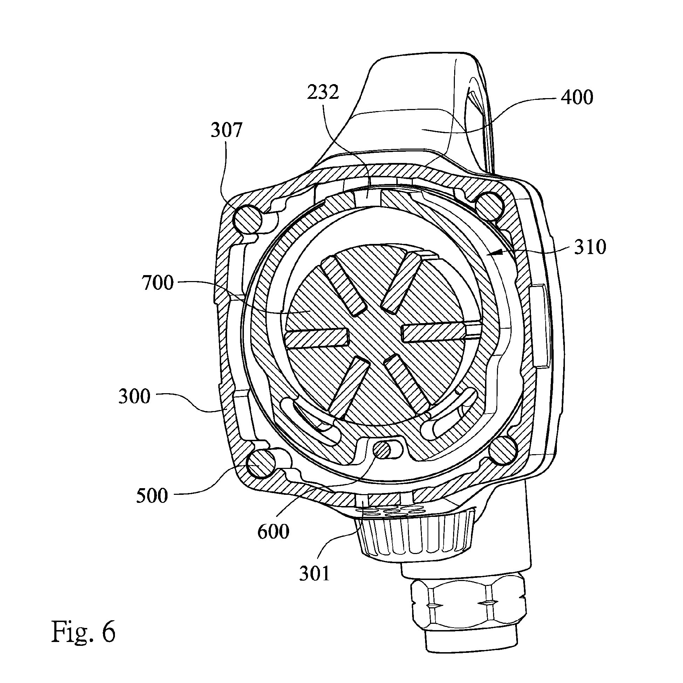

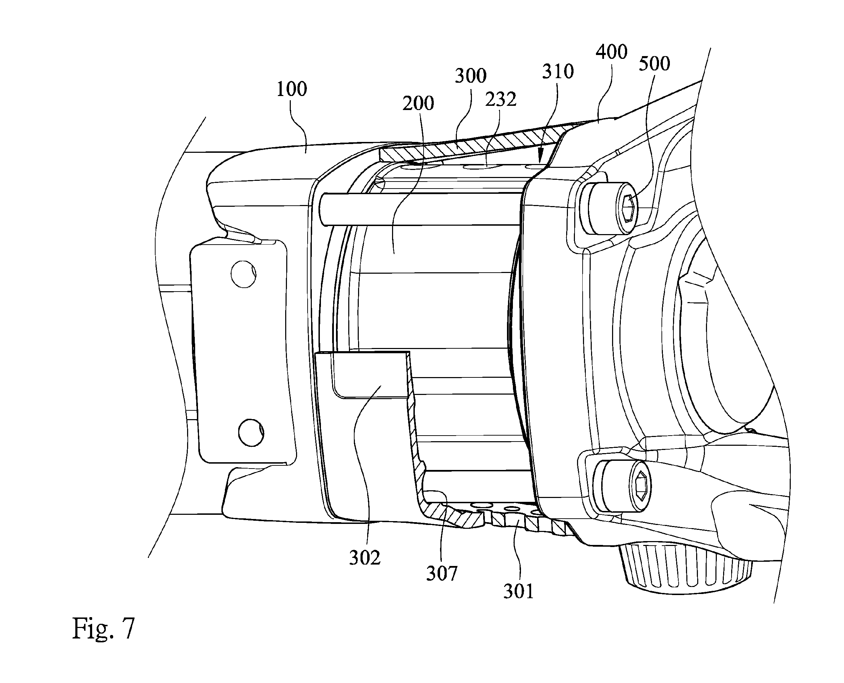

Referring back to Fig. 2, Fig. 3 and Fig. 4, the middle housing 300 is formed in a hollow shape correspondent to the shape of front housing 100, and the middle housing 300 coaxially surrounds the air cylinder 200 so as to form an air chamber 310 between the middle housing 300 and the air cylinder 200. The middle housing 300 includes a plurality of exhaust openings 301 and four receiving portions 307. The middle housing 300 can selectively include a trademark 302. The exhaust openings 301 communicate the air chamber 310 with an outside of the middle housing 300, and the air chamber 310 communicates the exhaust opening 301 of the middle housing 300 and the exhaust channels 232 of the cylinder body 230. The receiving portions 307 are for accommodating the four screwing pieces 500. Fig. 6 is a cross-sectional view taken along line 6-6 of the pneumatic tool shown in Fig. 3. Fig. 7 is a partially enlarged cross-sectional view of the pneumatic tool shown in Fig. 1. As shown in Fig. 6 and Fig. 7, the receiving portions 307 are communicated with the air chamber 310, so that the middle housing 300 has the advantages of ease of manufacture and light weight.

Referring back to Fig. 2, Fig. 3 and Fig. 4, the rear housing 400 includes a second depressing portion 420 and a second abutting surface 430. The second depressing portion 420 is recessedly formed at the end 450 of the rear housing 400 for engaging with the end 202 of the air cylinder 200. The second depressing portion 420 includes a second pressing surface 440. The second abutting surface 430 is outwardly extended from the second depressing portion 420 along a radical direction of the second depressing portion 420. The radical direction is perpendicular to the axial direction of the pneumatic tool.

When the front housing 100, the middling housing 300 and the rear housing 400 are assembled together, the end 201 of the air cylinder 200 is engaged with the first depressing portion 120 of the front housing 100, and the end 202 of the air cylinder 200 is engaged with the second depressing portion 420 of the rear housing 400, whereby the air cylinder 200 can sustain the screw stress. Specifically, the front step portion 221 (shown in Fig. 5) of the front end cover 220 is engaged with the first step portion 231 (shown in Fig. 5) of the cylinder body 230, the front end cover 220 is also engaged with the first depressing portion 120 of the front housing 100, and the first end 234 (shown in Fig. 5) of the cylinder body 230 is engaged with the first depressing portion 120 of the front housing 100. The rear outer edge 241 of the rear end cover 240 is engaged with the second step portion 233 (shown in Fig. 5) of the cylinder body 230, the rear end cover 240 is also engaged with the second depressing portion 420 (shown in Fig. 5) of the rear housing 400, and the second end 235 (shown in Fig. 5) of the cylinder body 230 is engaged with the second depressing portion 420 of the rear housing 400. The first pressing surface 140 abuts against the front end cover 220 along the axial direction of the pneumatic tool, and the second pressing surface 440 abuts against the rear end cover 240 along the axial direction of the pneumatic tool. Thus, the air cylinder 200 is stably positioned between the front housing 100 and the rear housing 400. The airtight degree between front housing 100 and the air cylinder 200 and the airtight degree between the rear housing 400 and the air cylinder 200 can be enhanced. The airtight degree between front end cover 220 and the cylinder body 230 and the airtight degree between the cylinder body 230 and rear end cover 240 can also be enhanced. Moreover, the first abutting surface 130 abuts against the end 303 of the middle housing 300 along the axial direction of the pneumatic tool, and the second abutting surface 430 abuts against the end 304 of the middle housing 300 along the axial direction of the pneumatic tool, thus the middle housing 300 is stably positioned between the front housing 100 and the rear housing 400. The airtight degree between the front housing 100 and the middle housing 300 and the airtight degree between the middle housing 300 and the rear housing 400 can also be enhanced.

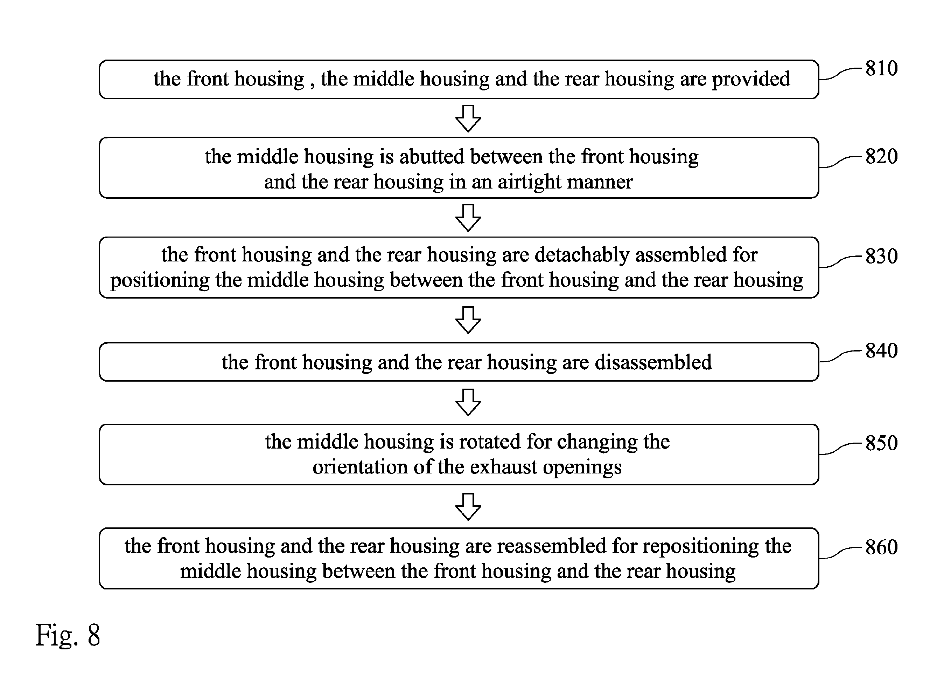

Referring back to Fig. 1, the front housing 100, the middle housing 300 and the rear housing 400 are assembled to form a square cylinder shape. In other embodiments, the front housing 100, the middle housing 300 and the rear housing 400 can be assembled to form a cylinder shape or a polygonal cylinder shape according to practical needs. When the front housing 100, the middle housing 300 and the rear housing 400 are assembled to form a square cylinder shape, a cylinder shape or a polygonal cylinder shape, it is favorable to change an orientation of the exhaust openings 301 and an orientation of the trademark 302. Fig. 8 is a flow diagram of a method for assembling the pneumatic tool shown in Fig. 1 according to another embodiment of the present disclosure, which shows how to change the orientation of the exhaust openings 301 and the orientation of the trademark 302. In Fig. 8, the method includes Step 810, Step 820, Step 830, Step 840, Step 850 and Step 860.

In Step 810, the front housing 100, the middle housing 300 and the rear housing 400 are provided. Preferably, the middle housing 300 is made of lightweight material.

In Step 820, the middle housing 300 is abutted between the front housing 100 and the rear housing 400 in an airtight manner.

In Step 830, the front housing 100 and the rear housing 400 are detachably assembled for positioning the middle housing 300 between the front housing 100 and the rear housing 400. After Step 830, as shown In Fig. 1, the orientation of the exhaust openings 301 is downward, the air exhausting direction Z1 of the pneumatic tool is downward, and the orientation of the trademark 302 is leftward.

In Step 840, the front housing 100 and the rear housing 400 are disassembled.

In Step 850, the middle housing 300 is rotated for changing the orientation of the exhaust openings 301 so as to change the air exhausting direction Z1 of the pneumatic tool.

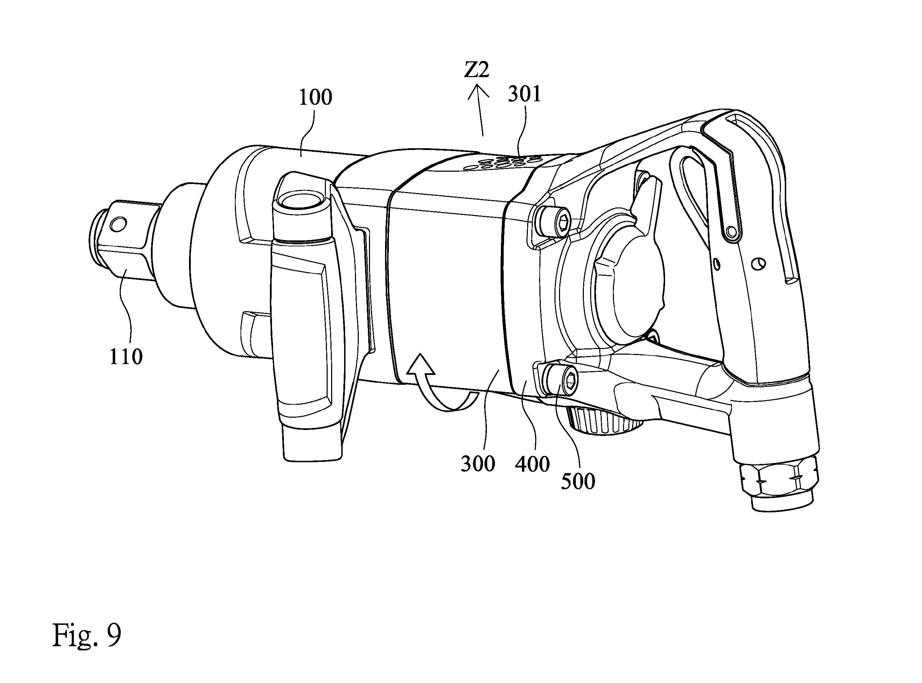

In Step 860, the front housing 100 and the rear housing 400 are reassembled for repositioning the middle housing 300 between the front housing 100 and the rear housing 400. Fig. 9 is a three-dimensional view of a pneumatic tool according to further another embodiment of the present disclosure. As shown in Fig. 9, after Step 860, the orientation of the exhaust openings 301 is changed, and an air exhausting direction Z2 of the pneumatic tool is upward. The orientation of the trademark 302 (not shown) is rightward.

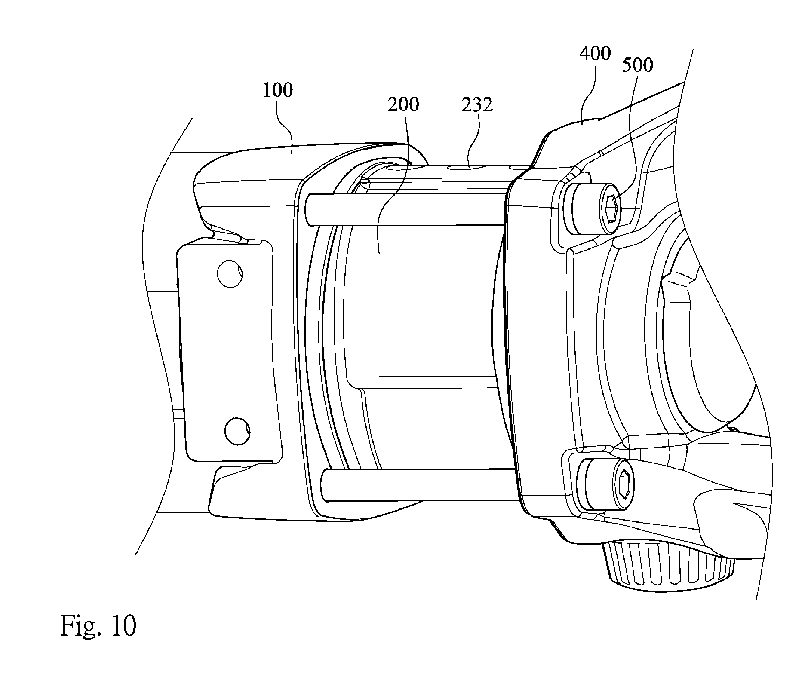

Fig. 10 is a three-dimensional view of a pneumatic tool according to yet another embodiment of the present disclosure. In Fig. 10, the front housing 100 is assembled with the rear housing 400 via four screwing pieces 500, thus the front housing 100 and the rear housing 400 abut against the air cylinder 200 in an airtight manner. The screw stress can be sustained by the air cylinder 200, thus the middle housing 300 can be omitted. Accordingly, the total weight and cost of the pneumatic tool can be reduced, and the production efficiency can be enhanced.

## Claims

1. An pneumatic tool, comprising:
a front housing (100) comprising a first depressing portion (120) recessedly formed at an end (160) thereof;
an air cylinder (200), comprising:
a cylinder body (230), comprising:
a first end (234) engaged with the first depressing portion (120) of the front housing (100);
a second end (235) opposite to the first end (234); and
at least one exhaust channel (232) formed at the cylinder body (230) for communicating an inside of the air cylinder (200) with an outside of the air cylinder (200); and
a front end cover (220) engaged with the first end (234) of the cylinder body (230);
a rotor (700) rotatably disposed in the air cylinder (200); and
a rear housing (400) comprising a second depressing portion (420) recessedly formed at an end (450) thereof, wherein the second end (235) of the cylinder body (230) is engaged with the second depressing portion (420);
wherein the front housing (100) is assembled with the rear housing (400), thus the front housing (100) and the rear housing (400) abut against the air cylinder (200) in an airtight manner.

2. The pneumatic tool of claim 1, wherein a first step portion (231) is formed at the first end (234) of the cylinder body (230), and the first step portion (231) is engaged with the front end cover (220).

3. The pneumatic tool of claim 2, wherein the front end cover (220) is formed in a plate shape, a front step portion (221) is formed at an outer edge of the front end cover (220), and the front step portion (221) of the front end cover (220) is engaged with the first step portion (231) of the cylinder body (230), and the front end cover (220) is respectively engaged with the first depressing portion (120) of the front housing (100) and the first step portion (231) of the cylinder body (230).

4. The pneumatic tool of claim 1, wherein the first depressing portion (120) comprises a first pressing surface (140) for abutting against the front end cover (220) along an axial direction of the pneumatic tool.

5. The pneumatic tool of claim 1, further comprising:
a middle housing (300) comprising at least one exhaust opening (301), wherein the middle housing (300) surrounds the air cylinder (200) so as to form an air chamber (310) therebetween, the exhaust opening (301) communicates the air chamber (310) with an outside of the middle housing (300), and the air chamber (310) communicates the exhaust opening (301) of the middle housing (300) and the exhaust channel (232) of the cylinder body (230).

6. The pneumatic tool of claim 1, wherein the cylinder body (230) is formed in a hollowing shape, and the air cylinder (200) further comprises a rear end cover (240) engaged with the second end (235) of the cylinder body (230).

7. The pneumatic tool of claim 6, wherein a second step portion (233) is formed at the second end (235) of the cylinder body (230), and the second step portion (233) is engaged with the rear end cover (240).

8. The pneumatic tool of claim 7, wherein the rear end cover (240) is formed in a plate shape, the rear end cover (240) comprises a rear outer edge (241), the rear outer edge (241) of the rear end cover (240) is engaged with the second step portion (233) of the cylinder body (230), and the rear end cover (240) is respectively engaged with the second step portion (233) of the cylinder body (230) and the second depressing portion (420) of the rear housing (400).

9. The pneumatic tool of claim 6, wherein the second depressing portion (420) comprises a second pressing surface (440) for abutting against the rear end cover (240) along an axial direction of the pneumatic tool.

10. The pneumatic tool of claim 6, further comprising:
a positioning member (600) positioned through the cylinder body (230) and inserted into the front end cover (220) and the rear end cover (240) for resisting a rotational force of the rotor (700).

11. The pneumatic tool of claim 5, wherein the middle housing (300) is formed in a hollow shape, the front housing (100) further comprises a first abutting surface (130) outwardly extended from the first depressing portion (120) for abutting against the middle housing (300) along an axial direction of the pneumatic tool, the rear housing (400) further comprises a second abutting surface (430) outwardly extended from the second depressing portion (420) for abutting against the middle housing (300) along the axial direction of the pneumatic tool, thus the middle housing (300) is stably positioned between the front housing (100) and the rear housing (400).

12. The pneumatic tool of claim 5, wherein the front housing (100), the middle housing (300) and the rear housing (400) are assembled to form a cylinder shape, a square cylinder shape or a polygonal cylinder shape.

13. A method for assembling the pneumatic tool of claim 5, comprising:
providing the front housing (100), the middle housing (300) and the rear housing (400);
abutting the middle housing (300) between the front housing (100) and the rear housing (400) in an airtight manner; and
detachably assembling the front housing (100) and the rear housing (400) for positioning the middle housing (300) between the front housing (100) and the rear housing (400).

14. The method of claim 13, wherein the middle housing (300) is made of lightweight material.

15. The method of claim 13, further comprising:
disassembling the front housing (100) and the rear housing (400);
rotating the middle housing (300) for changing an orientation of the exhaust opening (301); and
reassembling the front housing (100) and the rear housing (400) for repositioning the middle housing (300) between the front housing (100) and the rear housing (400).
